# EUROPEAN PATENT SPECIFICATION

(11) **EP 2 564 684 B1**
(45) Date of publication and mention of the grant of the patent: **10.02.2016**
(21) Application number: 12181987.4
(22) Date of filing: 28.08.2012
(51) Int. Cl.: A01D 69/02, B60L 1/00, B60L 3/00, B60L 7/06, B60L 7/14, B60L 11/18, B60L 15/20

(54) **Electric working vehicle**
Elektrisches Nutzfahrzeug
Véhicule de travail électrique

(30) Priority: 31.08.2011 JP 2011189613
(43) Date of publication of application: 06.03.2013
(73) Proprietor: Kokusan Denki Co., Ltd., Numazu-shi Shizuoka 410-0022 (JP)
(72) Inventor: Nakagawa, Masanori, Shizuoka, 410-0022 (JP)
(74) Representative: Beetz & Partner mbB

(56) References cited:
- EP-A2- 2 110 295
- WO-A1-2010/079301
- WO-A2-2008/042319
- US-A1- 2009 192 661

## Description

### BACKGROUND OF THE INVENTION

The present invention relates to an electric working vehicle, such as, a lawn mower, a snowplow or a harvester, etc., for example, i.e., for conducting a predetermined work and also being able to move by itself, with electromotive forces.

For example, in the following Patent Documents 1 and 2 is already known a working machine or a power plant, rotationally driving a blade cutter, and thereby conducting a job, e.g., grass cutting, for example, as an actuator (i.e., the lawn mower).

However, such the lawn mower is equipped with, in accordance with the conventional technology as was mentioned above, not only an electric motor for use of driving, but also an internal combustion engine for use of rotational driving of an onboard dynamo, in addition to rotation of the blade cutter; i.e., achieving so-called a hybrid-method working vehicle.

Further, in the following Patent Document 3 is already known a technology for driving by an electric motor, with applying a battery as an electric power source, wherein an electric lawn mower achieving high accuracy in the grass cutting is also already known.
[Patent Document 1] Japanese Patent Laying-Open No. 2004-275026 (2004);
[Patent Document 2] Japanese Patent Laying-Open No. 2006-507789 (2006); and
[Patent Document 3] Japanese Patent Laying-Open No. Hei 5-30832 (1993).

The document WO 2010/079301 A1 discloses an electric lawnmower according to the preamble of claim 1.

### BRIEF SUMMARY OF THE INVENTION

However, within such the working vehicle as was disclosed in the conventional technology mentioned above, in particular, the electric lawn mower disclosed in the Patent Document 3, no consideration is paid upon regeneration of the electric motor, i.e., the electric power source.

This enables to use the motor as a dynamo while utilizing that motor to be braking power or force (i.e., a regenerative brake), when the lawn mower moves down on a downhill, etc., for example. And, with charging the electric power generated in that occasion to the battery, as well as, elongating an operating hour of that lawn mower, it is possible to increase an efficiency of energy utilization by reducing a useless waste of energy (i.e., electric power).

However, when lawn mower moves down on the downhill, if the battery is under the condition of being fully charged up, it is impossible to return the electric power generated back to the battery (i.e., charge), and in general, this is consumed to be a current flow through a load resistor for use of discharging. Or, in particular, a lead storage battery, since it has a relatively large internal resistance, has a possibility of being in the condition of overvoltage, even if it is not the full-charge condition, depending on an amount of electric power regenerated; however, if trying to escape from the overvoltage by reducing the electric power regenerated, then also the braking force of the vehicle is reduced, and sometimes, this brings about a danger to an operator or driver. Then, for the purpose of avoiding the overvoltage, and also protecting the battery and also electric equipment connected with the battery from a breakdown due to the overvoltage, without reducing the braking force of the vehicle, it is conducted to consume the electric power regenerated through a regeneration resistor for use of discharging, even under the condition that the battery is overvoltage.

For that reason, conventionally, there is a necessity of a resistor having a relatively large size or configuration, being tolerable with large heat-generation, and this increases a number of parts; therefore, there are drawbacks, i.e., increasing a manufacturing cost and a product const, as well, and therefore being disadvantageous from an economical viewpoint.

Furthermore, there can be also considered consumption of the unnecessary electric power regenerated, by turning electric current through other motor(s), which is/are provided on the working vehicle, without utilizing such load resistor for use of discharging as mentioned above; however, it is acknowledged by the inventors of the present invention that, in such a case, there is a possibility that the working vehicle may causes an injury to a person who is conducting a work with using it, in particular, when that other motor rotates an actuator, such as, the blade cutter, i.e., being not preferable.

Then, according to the present invention, being accomplished by taking the drawback(s) of the conventional technology mentioned above into the consideration thereof, an object thereof is to provide a safe electric working vehicle, applying an electric motor therein, not only for use of running, but also for driving an actuator for conducting a work, being able to consume regeneration electric power without using the load resistor for use of discharging, and further not causing an injury to the person who is conducting the work with using thereof, in that instance, even under the condition where the battery is fully charged.

For achieving the object mentioned above, according to the present invention, first of all, there is provided an electric working vehicle, comprising: a body of vehicle; plural numbers of wheels, which are attached to said body; a running motor, which is configured to supply a driving force for running to at least one wheel of said plural numbers of wheels; a means, which is configured to be attached on part of said body of vehicle, and thereby conducting a predetermined work therewith; a work motor, which is configured to execute the predetermined work with using said working means; a battery, which is configured to be attached on part of said body of vehicle, and to supply electric power to said running motor and said work motor; a first power converter, which is configured to convert the electric power from said battery into required electric power to supply it to said running motor; a second power converter, which is configured to convert the electric power from said battery into required electric power to supply it to said work motor; and a controller portion, which is configured to control at least power conversion operations of said first power converter and said second converter, wherein as least, said first power converter is able to operate regeneration, and said controller portion controls said second power converter in such a manner that regeneration electric power when said first power converter operates under condition of the regeneration is supplied to said work motor, depending on a charging condition of said battery.

And, also, according to the present invention, there is further provided the electric working vehicle, as described in the above, wherein said work motor is a 3-phase AC motor and said controller portion controls said second power converter in such a manner that a torque component of the electric power to be supplied from said second power converter to said 3-phase AC work motor is suppressed to a degree so that said 3-phase AC work motor does not work said working means.

Or, preferably, said means for conducting the predetermined work is a blade for cutting grasses, and in that case, preferably, said controller portion controls said second power converter, so as to supply and consume electricity to said work motor, depending on an operating condition of said blade for cutting grasses, as well as, the charging condition of said battery, and further, said controller portion controls said second power converter, so that the torque component of the electric power to be supplied comes down to be almost zero (0), when said blade for cutting grasses is stopped.

According to the present invention mentioned above, there can be provided a safe electric working vehicle, in particular, a lawn mower, applying an electric motor therein, not only for use of running, but also for driving an actuator for conducting a work, for enabling to maintain a stable braking force, chiefly, as the vehicle, and further not causing an injury to the person who is conducting the work with using thereof, in that instance, since being able to consume the regenerated electric power without using the load resistor for use of discharging, even under the condition where the battery is fully charged.

### BRIEF DESCRIPTION OF THE SEVERAL VIEWS OF THE DRAWING

Those and other objects, features and advantages of the present invention will become more readily apparent from the following detailed description when taken in conjunction with the accompanying drawings wherein:
Fig. 1 is a view for showing an outlook configuration of an electric lawn mower, as an example of an electric working vehicle, according to an embodiment of the present invention;
Fig. 2 is a circuit block diagram for showing the electric lawn mower mentioned above, in particular, mainly, electromotive parts thereof;
Fig. 3 is a circuit block diagram for showing details of a motor for running and a motor for driving a blade, and also a controller of the motor for running and a controller of the motor for driving the blade;
Fig. 4 is a circuit block diagram for showing further details of the controller of the motor for driving the blade mentioned above; and
Fig. 5 is a flowchart for showing an example of a processing method of control for use of consumption of a regenerated electric power within a drive circuit of the controller of the motor for driving the blade mentioned above.

### DETAILED DESCRIPTION OF THE PREFERRED EMBODIMENTS

Hereinafter, detailed explanation will be given on an electric lawn mower, applying an electric motor therein, not only for use of running, but also for driving an actuator for conducting a work, as an example of the electric working vehicle, according to an embodiment of the present invention, by referring to drawings attached herewith.

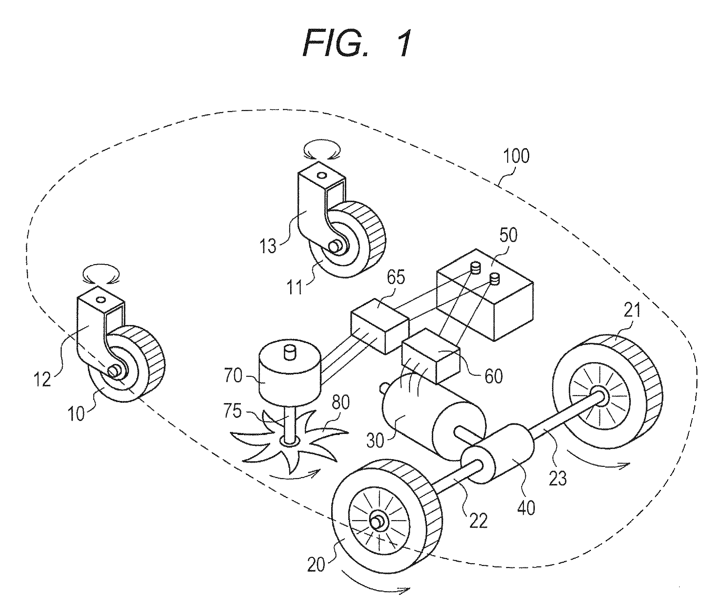

First of all, Fig. 1 attached herewith shows the configuration of the electric lawn mower, as the example of the electric working vehicle, according to the present invention, briefly, wherein said lawn mower comprises a pair of front wheels 10 and 11, as well as, a pair of rear wheels 20 and 21, and the front wheels 10 and 11 are attached to a lower surface of a mower body shown by a broken line 100 in the figure, in a freely rotatable and movable manner, through casters 12 and 13, respectively, while the rear wheels 20 and 21 are attached to the lower surface of the mower body, fixedly. Furthermore, no driving means is provided for the front wheels 10 and 11, and on the other hand, a motor 30 for running (hereinafter, being called a "running motor") is attached to the rear wheels 20 and 21, through a reduction gear 40 and respective driving shafts 22, 23 thereof.

However, in the present embodiment is applied a brushless AC motor to be the running motor 30, as an example thereof, and to that motor is supplied a DC power from a battery 50 on the vehicle, after being converted into three-phases AC current having a desired frequency thereof by means of a controller (i.e., a converter) 60 for the running motor, including a CPU and an inverter of PWM method therein.

Also, with the battery 50 on the vehicle is connected a motor 70 for use of working (not for running), i.e., for driving a blade (hereinafter, being called a "blade motor"), through a controller 65 (i.e., the converter) for the blade motor, including a CPU and an inverter of PWM method therein, and therefore the DC current is converted into three-phases AC current having a desired frequency thereof by the blade motor controller 65 and is supplied to the blade motor 70. Further, at a lower end of a rotating output shaft 75 of this blade motor 70 for use of working is attached a rotary-type blade 80, as a cutter for conducting the work, i.e., cutting grasses.

Thus, according to the lawn mower having such configuration as was mentioned above, a rotating torque generated by the running motor 30 is transmitted to both the left and the right wheels 20 and 21, via the reduction gear 40 mentioned above. In that instance, due to the function of the reduction gear 40, the rotating torque of the motor is transmitted to driving shafts 22 and 23, while being differentially decelerated, respectively, and thereby it is possible to rotate/drive the left and the right wheels 20 and 21, at a desired ratio between them in the rotating torques (i.e., rotating speeds), and therefore a running direction of the vehicle can be controlled, freely. However, at this instance, the front wheels 10 and 11 come to move, following a moving direction that is determined by the rear wheels 20 and 21, due to the function of the casters 12 and 13. On the other hand, the rotating torque generated by the blade motor 70, not for running, i.e., for driving the blade, rotates/drives the cutter blade 80, and thereby cutting the grasses.

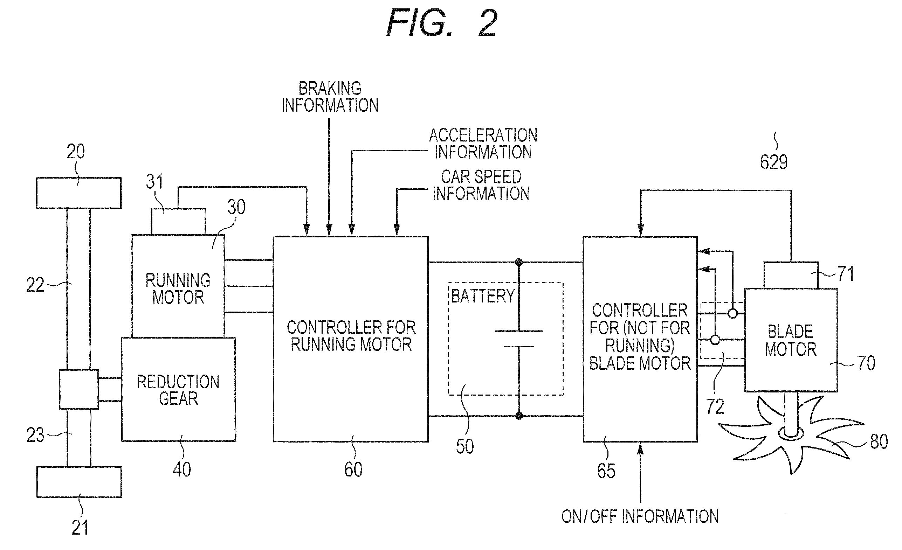

Next, Fig. 2 attached herewith is a circuit block diagram for showing electromotive parts thereof, in particular, within the lawn mower according to the present invention, the outlook configuration thereof being shown in the above, wherein the constituent elements, which are shown in Fig. 1 mentioned above, are shown with attaching the same reference numerals thereof.

Thus, to the battery 50 are electrically connected the controller 60 for the running motor and the controller 65 for driving the blade motor, in parallel with, and the electric power of the three-phases AC for driving is supplied to the running motor 30 and the blade motor 70, respectively. And, into the controller 60 for the running motor is inputted, for example, braking information indicative of pushing-down of a braking pedal, acceleration information indicative of pushing-down of an acceleration pedal, which are provided on the lawn mower, and further information of a mower speed, etc., from sensors, which are not shown herein, and the controller 60 of that running motor executes a predetermined calculation(s), upon basis of those information, with using software, which is stored in advance within an internal memory of the CPU, etc., thereby controlling the rotating torque and the speed, which are outputted from the running motor 30. On the other hand, the controller 65 for the blade motor also execute a predetermined calculation, upon basis of ON/OFF information of the blade motor, i.e., the information indicative of if the blade 80 should be rotated or not by the blade motor 70, thereby controlling the rotating torque and the speed of the blade motor 70. Further, in part of those running motor 30 and the blade motor 70 are attached sensors 31 and 71, for example, to detect the rotation speeds thereof, respectively, and a sensor 72 to detect driving current for the blade motor, wherein the outputs thereof, i.e., motor information, are fed back to the controllers 60 and 65, respectively.

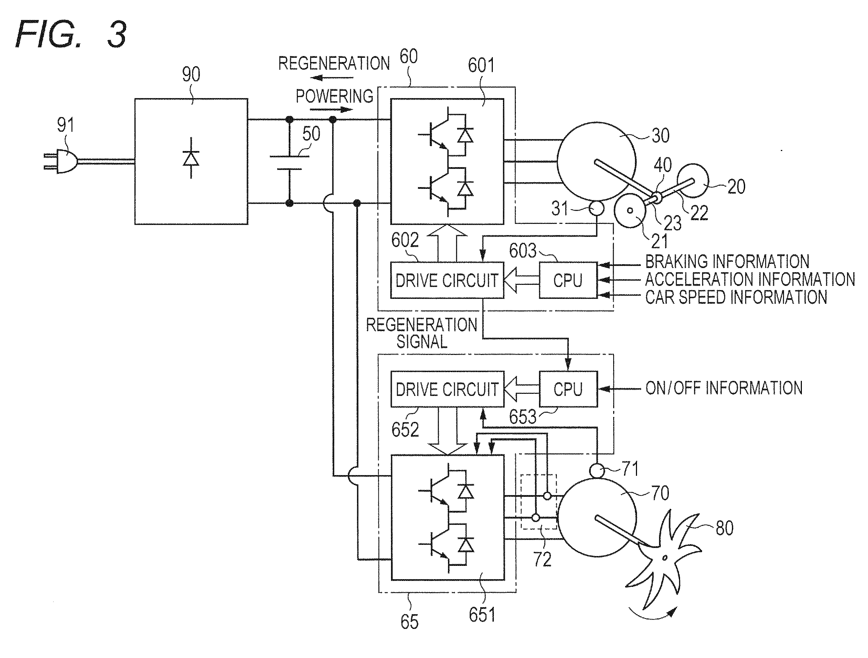

Following to the above, Fig. 3 attached herewith shows the running motor 30 and the blade motor 70 mentioned above, as well as, the details of the controller 60 for that running motor and the controller 65 for the blade motor, wherein as is apparent from the figure, each motor controller 60 or 65 comprises an inverter circuit 601 or 651, each having six (6) pieces of electric power elements, such as, power transistors, FETs (Fiele Emmission Transistors), or IGBTs (Insulated-Gate Bipolar Transistors), including commutating diodes therein, etc., for example. Also, each motor controller 60 or 65 comprises a drive circuit 602 or 6 5 2 fo r producing control signals fo r controlling conduction/interruption of each power element of that inverter circuit, and a CPU 603 or 653 for controlling that drive circuit, respectively. Also, other than those, the constituent elements attached with such the same reference numerals as was mentioned above are same to those mentioned above and therefore the explanation thereof will be omitted herein.

In this figure are shown a charging circuit (i.e., a DC converter) 90 for charging up that battery with using a commercial electric power source, as well as, the battery 50 mounted on the car mentioned above. Thus, that charging circuit (i.e., the DC converter) 90 may be mounted in part of the electric lawn mower, i.e., being the working vehicle, or may be prepared or formed in a separate body therefrom, and with this, it is possible to charge up the battery 50, for example, by inserting a plug 91 into a household power source (e.g., a socket).

In addition thereto, within the electric lawn mower, i.e., the working vehicle, according to the present invention, in particular, the running motor 30 thereof, normally, conducts the followings, selectively, between so-called a "powering" operation for achieving a required rotating operation with supply of electric power from the battery 50, and, for example, a "regeneration" operation for generating electric power with using the braking force when the vehicle goes down a hill. The current from the battery 50 mentioned above at this time is shown by a arrow "powering" or "regeneration" in the figure. Thus, when operating in this "regeneration" operation, the regeneration current flows into the battery 50, through the inverter circuit 601, which builds up the controller 60 for the running motor. However, in that instance, if the battery 50 is in the condition of being charged up to the prescribed capacity thereof, already (hereinafter, being called "full-charge condition"), supply of the regeneration electric power mentioned above brings the battery to be overcharged, and this is not preferable from a viewpoint of protection of the battery.

Then, according to the present invention, in the "regeneration" operation, in particular, when the battery 50 is in the "full-charge condition", the regeneration current from the inverter circuit 601 is supplied, not to the battery 50 mentioned above, but to the blade motor 70, so as to rotate/drive the blade 80 for conducting the grass cutting. With this fact, with utilizing the "regeneration" electric power, not to be used for charging the battery, for the operation of the blade motor 70, it is possible to reduce a waste of the electric power of the battery 50 on the vehicle, and to keep a stable braking force of the vehicle, as well.

However, in that instance, when the blade motor 70 in an operating condition (i.e., rotating/driving), it is preferable to utilize the "regeneration" electric power for operation of the blade motor 70. However, in particular, when the blade 80 is stopped the rotation/driving thereof (for example, when the lawn mower only moves to a destination, but not conducting the work of grass cutting), the supply of the "regeneration" electric power to the blade motor 70 results into rotation of the blade for conducting the grass cutting work, and unprepared or careless rotation of the blade accompanying this may cause a possibility of injuring a worker who is operating the lawn mower, and so on, and therefore this is undesirable.

Then, according to the present invention, in such case, although the "regeneration" electric power maintained above is supplied to the blade motor 70; however, that "regeneration" electric power is consumed within the blade motor 70, with safe and certainty, without rotating that blade 80, unpreparedly or carelessly, by controlling the drive circuit 652 of the controller 65 for the blade motor, the details of which will be mentioned later.

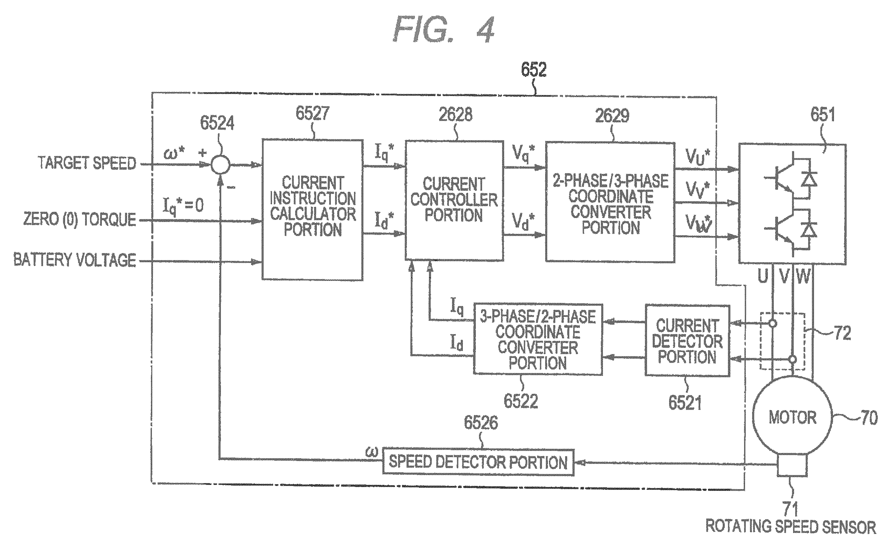

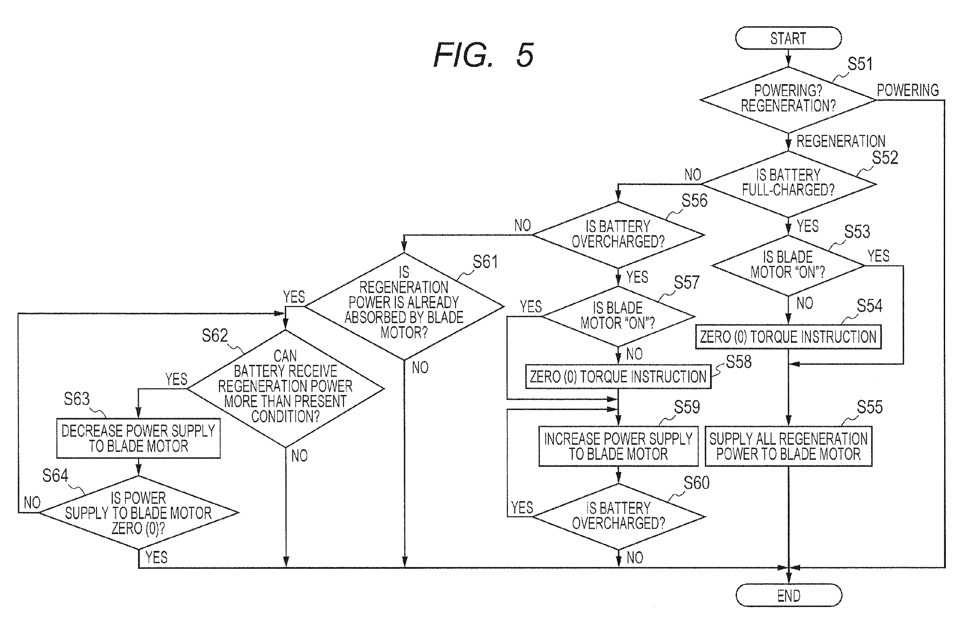

Hereinafter, detailed explanation will be given on an example of the detailed circuit configuration of the drive circuit 652 mentioned above, for consuming the "regeneration" electric power mentioned above by means or within the blade motor 70, and also an example of a method for processing control for that, by referring to Figs. 4 and 5 attached herewith.

First of all, in Fig. 4 is shown the detailed circuit configuration of the drive circuit 652 mentioned above; however even in this figure, the constituent elements attached with the reference numerals, being same to those mentioned above, are similar to those mentioned above.

In the figure, a rotation speed signal from the rotation speed sensor 71, which is attached on part of the motor 70 is detected by a speed detector portion 6526, and thereby a motor rotation speed can be obtained.

On the other hand, the rotation speed obtained in the above is compared with a target speed (for example, being inputted from the CPU shown in Fig. 3) in a subtracter 6524, and as a result thereof, being combined with a zero (0) torque instruction and battery voltage, a torque current instruction "Iq*" and an excitation current instruction "Id*" are produced in a current instruction calculator portion 6527. Also, detection of the currents of U-phase and V-phase from the sensor 72 (in the present embodiment, two (2) sets of current detectors for detecting the currents of U-phase and V-phase, for example) is made by means of a current detector portion 6521, and the current components, i.e., torque current "Iq" and excitation current "Id" are produced by a 3-phase/2-phase coordinate converter portion 6522, to be inputted into a current controller portion 2628. In this current controller portion 2628 are obtained q-axis voltage (Vq*) and d-axis voltage (Vd*) , upon basis of the current instructions and feedback currents, which are inputted, and upon basis of those voltages, in a 2-phase/3-phase coordinate converter portion 2629 are produced control signals Vu*, Vv* and Vw*, for controlling elements of the inverter circuit 651 of supplying 3-phase rotating stator currents to be supplied to the blade motor 70, as is similar to that in the conventional art.

Further, in the present embodiment, the rotating torque generated by the blade motor 70 is suppressed by bringing the torque current instruction "Iq*" corresponding to a "zero torque" instruction from an outside to zero (0), and for that reason, the blade 80 will not rotate, unpreparedly or carelessly. Thus, the "regeneration" electric power mentioned above is used within the blade motor 70, not in the form of the rotating torque, but in the form of the excitation current, and consumed in the form of heat generation of windings.

Next, the processing of control for consuming the "regeneration" electric power by the blade motor 70 will be shown by referring to a flowchart shown in Fig. 5. In the figure, when the processing is started, first of all, determination is made on whether the running motor 30 is in the condition of the "powering" operation, or in the condition of the "regeneration" operation (step S51). As a result thereof, if being determined in the "powering" operation, that process is stopped. However, the determination on whether the motor 30 is in the "regeneration" operation or not, for example, as is shown in Fig. 3, may be made by determining that the said motor 30 is in the regeneration operation condition within the drive circuit 602 for controlling the inverter circuit 601 of supplying electric power to the running motor 30, and outputting the result thereof to an outside as a "regeneration signal", as shown in the figure, or in the place of this, for example, while detecting the current flowing between the inverter circuit 601 and the battery 50it is also possible to determined the "regeneration" condition, depending on the direction of flowing thereof (the inverter circuit → the battery).

On the other hand, when the motor 30 is determined to be in the "regeneration" operation condition, further determination is made on the charging condition of the battery 50 mentioned above. Thus, determination is made on whether the battery 50 is in the full-charge condition or not (for example, SOC=80% to 100%) (step S52). As a result thereof, in case where the battery 50 is in the full-charge condition (see "YES" in the figure), further determination is made on whether the blade motor 70 is in a driving (or ON) condition or not (step S53). This may be determined, for example, with utilizing a switch or an instruction for instructing start/end of the grass cutting operation (for example, ON/OFF information shown in Fig. 4). And, as a result of the determination in the step S53 mentioned above, if the blade motor 70 is in the operating (ON) condition (see "YES" in the figure), all the regeneration electric power is supplied to the blade motor 70 (step S55), and then the process is ended. In this instance, all the regeneration electric power is consumed while keeping the blade motor rotating. On the other hand, if the blade motor 70 is not in the operating (ON) condition (see "NO" in the figure), after generating the zero (0) torque instruction (step S54), the process shifts into the step S55, similar to the case where it is in the driving (ON) condition, i.e., all the regeneration electric power is supplied to the blade motor 70, and then the process is ended. However, since the zero (0) torque instruction is generated, all the regeneration electric power is consumed while stopping the blade driving.

However, in the step S52 mentioned above, when the battery 50 is determined not in the full-charge condition (see "NO" in the figure), further determination is made on whether the battery voltage is overcharge or not (step S56).

As a result thereof, when the battery voltage is overvoltage (see "YES" in the figure), in the similar manner to that mentioned above, further determination is made on whether the blade motor 70 is in the operating (ON) condition or not (step S57). When the blade motor 70 is in the operating (ON) condition (see "YES" in the figure), the electric power to be supplied to the blade motor is increased (step S59). Next, determination is made on whether the battery is overvoltage or not (step S60), and when it is determined to be overcharge, then the process movers into a step S59, in which the electric power supplied to the blade motor is further increased. Increase of the electric power supplied to the blade motor is continued until when the overcharge condition of the battery is dissolved. When the battery is not in the condition of the overcharge, the process is ended. On the other hand, when the blade motor 70 is not in the operating (ON) condition (see "NO" in the figure), the zero (0) torque instruction is generated (step S58). Thereafter, also the electric power supplied to the blade motor is kept to increase, until when the overcharge condition of the battery is dissolved. When the battery is not in the condition of the overvoltage, the process is stepped.

On the other hand, in the step S56 mentioned above, if it is determined that the battery voltage is not the overvoltage (see "NO" in the figure), further determination is made on whether the regeneration electric power was already absorbed or not by the blade motor (step S61). As a result thereof, when the determination is made that the regeneration electric power was already absorbed (see "YES" in the figure), in addition thereto, determination is made if the battery is acceptable or not for the regeneration electric power much more than the present condition (step S62). The determination on whether the battery is acceptable or not for the regeneration electric power much more than the present condition can be made, for example, by providing a threshold value to be a little bit lower than a threshold value of the overvoltage of the battery voltage.

As a result thereof, when the determination is made that the battery is acceptable for the regeneration electric power more than the present condition (see "YES" in the figure), the electric power supplied to the blade motor is decreased (step S63). Next, determination is made whether the electric power supplied to the blade motor is zero (0) or not (step S64), and if it is zero (0), then the process is ended. If it is not zero (0), the process turns back to the step S62, and then determination is made on whether the battery is acceptable or not the regeneration electric power more than the present condition, and if it is acceptable, further the electric power supplied to the blade motor is decreased (step S63). If it is determined that the battery is unacceptable more than the present condition in the step S62, or if it is determined that the regeneration electric power was not already absorbed in the step S61, then the process is ended. On the other hand, if it is determined that the regeneration electric power was not already absorbed in the step S61, also the process is ended.

Furthermore, in the explanation mentioned above, the battery 50 is made up with four (4) pieces of batteries, which are connected in series, and the voltage thereof, 58∼64V (=(14.5∼16V)/1 piece x 4), is set to be a reference for determining the overvoltage (= V1, see the step S56), while as a reference of the voltage unacceptable for the battery (see the step S62) is set to 56∼62V = V2. Further, with this, the voltage being acceptable for the battery comes to 56∼62V, being equal to or less than the V2.

With such charging control of the regeneration electric power as was mentioned above, driving of the blade motor 70 is conducted while returning the regeneration electric power to the battery. Thus, with this, it is possible to protect the battery 50 from consuming the electric power unnecessarily. On the other hand, in case where the blade motor 70 is not under the operation (e.g., "ON") condition, i.e., under the stopping condition, as the result of determination, as was shown in Fig. 4 mentioned above, the "regeneration" electric power is used, not in the form of the rotating torque, but in the form of the excitation current, within the blade motor 70; in other words, it is consumed in the form of heat of the windings (see steps S55 and S59). In more details, in the present embodiment, the "zero (0) torque" instruction is outputted to the current instruction calculator portion 6527 building up the drive circuit 652 for the blade motor 70 mentioned above. Thus, the torque current "Iq" is set to zero (0), and thereby the rotating torque generated by the blade motor 70 is made small. For that reason, the blade will not rotate, unpreparedly or carelessly, while the "regeneration" electric power is consumed in the form of heat generation of the windings, e.g., the excitation current.

Also, in particular, in case of a lead storage battery, since it has a large internal resistance even when not being in the "full-charge condition", it shows a phenomenon of rising up a terminal voltage thereof (seems to be not preferable for the battery), and then, it is impossible to return the regeneration electric power to the battery, more than that, if the terminal voltage rises up to be a certain value or higher than that, even if not being in the "full-charge condition", for the purpose of protecting equipment thereof, such as, (at least) the controller, etc. In that case, it is preferable to send a part of the regeneration electric power (i.e., only that, which cannot be absorbed by the battery) towards the non-running motor, so as to be absorbed therein, as is similar when being in the "full-charge condition". In more details, this can be deal with, by observing the battery voltage during when the regeneration is conducted, even if the battery is not in the "full-charge condition", and increasing the current to be supplied to the blade (non-running) motor when that voltage looks to be equal to or greater than a certain threshold value, until when that voltage goes down to be equal to or less than that threshold value. In other words, the regeneration energy is absorbed by the blade motor, when being in the condition of the overvoltage, even if not being in the "full-charge condition".

However, the controlling process mentioned above is accomplished, for example, by the CPU 653, which builds up the motor controller 65 for the blade motor 70 shown in Fig. 4 mentioned above, through execution of the software being stored in an internal memory thereof. However, the present invention should not be restricted only to such configuration as was mentioned above, and also, for example, the CPU 653 may be shared with the CPU 603, which builds up the motor controller 60 for the running motor 30 mentioned above. In the embodiment mentioned above, the explanation was given that the "regeneration" electric power is consumed, not in the form of the rotating torque, but in the form of the exciting current, within the blade motor 70.

Although it is preferable to apply a position sensor having high resolution power and to execute (current) feedback control, because they increase an accuracy of the zero (0) torque, and also from a viewpoint of safety; however, in the place thereof, may be a position sensor having a low resolution power and a feed-forward control.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. An electric working vehicle, comprising:
a body of vehicle (100);
plural numbers of wheels (10, 11, 20, 21), which are attached to said body (100);
a running motor (30), which is configured to supply a driving force for running to at least one wheel (20, 21) of said plural numbers of wheels (10, 11, 20, 21);
a means (80), which is configured to be attached on part of said body of vehicle (100), and thereby conducting a predetermined work therewith;
a work motor (70), which is configured to execute the predetermined work with using said working means (80) ;
a battery (50), which is configured to be attached on part of said body of vehicle (100), and to supply electric power to said running motor (30) and said work motor (70);
a first power converter (60), which is configured to convert the electric power from said battery (50) into required electric power to supply it to said running motor (30);
a second power converter (65), which is configured to convert the electric power from said battery (50) into required electric power to supply it to said work motor (70); and
a controller portion (603, 653), which is configured to control at least power conversion operations of said first power converter (60) and said second converter (65), wherein
as least, said first power converter (60) is able to operate regeneration, and
said controller portion (603, 653) controls said second power converter (65) in such a manner that when said first power converter (60) operates under condition of the regeneration, regeneration electric power is supplied to said work motor (70), depending on a charging condition of said battery (50) **characterized in that** said work motor (70) is a 3-phase AC motor and **in that** said controller portion (603, 653) is further configured to control said second power converter (65) in such a manner that a torque component of the electric power to be supplied from said second power converter (65) to said 3-phase AC work motor (70) is suppressed to a degree so that said 3-phase AC work motor (70) does not work said working means (80).

2. The electric working vehicle, as described in the claim 1, wherein said means (80) for conducting the predetermined work is a blade for cutting grasses.

3. The electric working vehicle, as described in the claim 2, wherein said controller portion (603, 653) controls said second power converter (65), so as to supply and consume electricity to said 3-phase AC work motor (70), depending on an operating condition of said blade (80) for cutting grasses, as well as on the charging condition of said battery (50).

4. The electric working vehicle, as described in the claim 3, wherein said controller portion (603, 653) controls said second power converter (65), so that the torque component of the electric power to be supplied comes down to be almost zero , when said blade (80) for cutting grasses is stopped.

## Patentansprüche

1. Elektrisches Nutzfahrzeug, welches Folgendes umfasst:
eine Fahrzeugkarosserie (100); eine Mehrzahl von Rädern (10, 11, 20, 21), welche an der besagten Karosserie befestigt sind;
einen Fahrmotor (30), welcher derart konfiguriert ist, dass er eine Antriebskraft für das Fahren auf mindestens ein Rad (20, 21) aus dieser besagten Mehrzahl von Rädern (10, 11, 20, 21) ausübt;
eine Vorrichtung (80), welche derart konfiguriert ist, dass sie an einem Teil der besagten Fahrzeugkarosserie (100) angebracht werden kann, und so eine vorgegebene Arbeit damit ausführen kann;
einen Arbeitsmotor (70), welcher derart konfiguriert ist, dass er die vorgegebene Arbeit unter Verwendung der besagten Vorrichtung (80) ausführt;
eine Batterie (50), welche derart konfiguriert ist, dass sie an einem Teil der besagten Fahrzeugkarosserie (100) angebracht werden kann, und derart, dass sie den besagten Fahrmotor (30) und den besagten Arbeitsmotor (70) mit elektrischem Strom versorgt;
einen ersten Leistungswandler (60), welcher derart konfiguriert ist, dass er den elektrischen Strom aus der besagten Batterie (50) in den benötigten elektrischen Strom umwandelt, der an den besagten Fahrmotor (30) geliefert werden soll;
einen zweiten Leistungswandler (65), welcher derart konfiguriert ist, dass er den elektrischen Strom aus der besagten Batterie (50) in den benötigten elektrischen Strom umwandelt, der an den besagten Arbeitsmotor (70) geliefert werden soll;
einen Steuerungsbereich (603, 653), welcher derart konfiguriert ist, dass der mindestens die Leistungswandlungsvorgänge des besagten ersten Leistungswandlers (60) und des besagten zweiten Leistungswandlers (65) steuert, wobei mindestens der besagte erste Leistungswandler (60) in der Lage ist, die Regeneration durchzuführen, und
derart, dass der besagte Steuerungsbereich (603, 653) den besagten zweiten Leistungswandler (65) derart steuert, dass zu einem Zeitpunkt, zu dem der besagte erste Leistungswandler (60) unter den Bedingungen der Regeneration arbeitet, der regenerierte Strom an den besagten Arbeitsmotor (70) gespeist wird, abhängig vom Ladestatus der besagten Batterie (50),
**dadurch gekennzeichnet, dass** der besagte Arbeitsmotor (70) ein 3-Phasen-Drehstrom-Motor ist, und dadurch, dass der besagte Steuerungsbereich (603, 653) weiter derart konfiguriert ist,
dass er den besagten zweiten Leistungswandler (65) derart steuert, dass eine Drehmomentkomponente des elektrischen Stroms, die von dem zweiten Leistungswandler (65) an den 3-Phasen-Drehstrom-Arbeitsmotor (70) gespeist wird, zu einem Grad unterdrückt wird, bei dem der 3-Phasen-Drehstrom-Arbeitsmotor (70) die besagte Vorrichtung (80) nicht antreibt.

2. Das elektrische Nutzfahrzeug wie in Anspruch 1 beschrieben, wobei die besagte Vorrichtung (80) für die Durchführung der vorbestimmten Arbeit ein Schneidmesser für das Schneiden von Gras ist.

3. Das elektrische Nutzfahrzeug wie in Anspruch 2 beschrieben, wobei der besagte Steuerungsbereich (603, 653) den besagten zweiten Leistungswandler (65) derart steuert, dass dem besagten 3-Phasen-Drehstrom-Arbeitsmotor (70) je nach dem Betriebszustand des besagten Schneidmessers für das Schneiden von Gras (80), sowie abhängig vom Ladezustand der besagten Batterie (50) Elektrizität zugeführt und entnommen wird.

4. Das elektrische Nutzfahrzeug wie in Anspruch 3 beschrieben, wobei der besagte Steuerungsbereich (603, 653) den besagten zweiten Leistungswandler (65) derart steuert, dass die Drehmoment-Komponente des elektrischen Stroms, der geliefert werden soll, auf beinahe null absinkt, wenn das besagte Schneidmessers für das Schneiden von Gras (80) gestoppt wird.

## Revendications

1. Véhicule de travail électrique, comprenant :
une carrosserie de véhicule (100) ;
des nombres multiples de roues (10, 11, 20, 21), qui sont fixées à ladite carrosserie (100) ;
un moteur de roulage (30), qui est configuré pour délivrer une force d'entraînement de roulage à au moins une roue (20, 21) desdits nombres multiples de roues (10, 11, 20, 21) ;
un moyen (80), qui est configuré pour être fixé sur une partie de ladite carrosserie de véhicule (100), et ainsi exécuter un travail prédéterminé avec celle-ci ;
un moteur de travail (70), qui est configuré pour exécuter le travail prédéterminé en utilisant ledit moyen (80) de travail ;
une batterie (50), qui est configurée pour être fixée sur une partie de ladite carrosserie de véhicule (100), et pour délivrer une énergie électrique audit moteur de roulage (30) et audit moteur de travail (70) ;
un premier convertisseur d'énergie (60), qui est configuré pour convertir l'énergie électrique provenant de ladite batterie (50) en une énergie électrique requise pour la délivrer audit moteur de roulage (30) ;
un deuxième convertisseur d'énergie (65), qui est configuré pour convertir l'énergie électrique provenant de ladite batterie (50) en une énergie électrique requise pour la délivrer audit moteur de travail (70) ; et
une partie de contrôleur (603, 653), qui est configurée pour contrôler au moins des opérations de conversion d'énergie dudit premier convertisseur d'énergie (60) et dudit deuxième convertisseur (65), dans lequel
au moins ledit premier convertisseur d'énergie (60) est apte à opérer une régénération, et
ladite partie de contrôleur (603, 653) contrôle ledit deuxième convertisseur d'énergie (65) de telle manière que, lorsque ledit premier convertisseur d'énergie (60) fonctionne sous la condition de régénération, une énergie électrique de régénération est délivrée audit moteur de travail (70), en fonction d'une condition de charge de ladite batterie (50),
**caractérisé en ce que** ledit moteur de travail (70) est un moteur CA triphasé et **en ce que**
ladite partie de contrôleur (603, 653) est en outre configurée pour contrôler ledit deuxième convertisseur d'énergie (65) de telle manière qu'une composante de couple de l'énergie électrique devant être délivrée dudit deuxième convertisseur d'énergie (65) audit moteur de travail (70) CA triphasé est supprimée à un degré tel que ledit moteur de travail (70) CA triphasé ne fait pas fonctionner ledit moyen (80) de travail.

2. Véhicule de travail électrique selon la revendication 1, dans lequel ledit moyen (80) pour exécuter le travail prédéterminé est une lame pour couper des herbes.

3. Véhicule de travail électrique selon la revendication 2, dans lequel ladite partie de contrôleur (603, 653) contrôle ledit deuxième convertisseur d'énergie (65) de façon à délivrer et faire consommer de l'électricité audit moteur de travail (70) CA triphasé, en fonction d'une condition de fonctionnement de ladite lame (80) pour couper des herbes, ainsi que de la condition de charge de ladite batterie (50).

4. Véhicule de travail électrique selon la revendication 3, dans lequel ladite partie de contrôleur (603, 653) contrôle ledit deuxième convertisseur d'énergie (65) de façon à ce que la composante de couple de l'énergie électrique devant être délivrée chute à presque zéro lorsque ladite lame (80) pour couper des herbes est stoppée.
